# EUROPEAN PATENT SPECIFICATION

(11) **EP 2 647 863 B1**
(45) Date of publication and mention of the grant of the patent: **01.01.2020**
(21) Application number: 11844815.8
(22) Date of filing: 28.11.2011
(51) Int. Cl.: F16D 65/12, C04B 35/83

(54) **METHOD FOR MANUFACTURING A CARBON-CERAMIC BRAKE DISK**
HERSTELLUNGSVERFAHREN FÜR EINE KOHLENSTOFF-KERAMIK-BREMSSCHEIBE
PROCÉDÉ POUR LA FABRICATION D'UN DISQUE DE FREIN EN CARBONE-CÉRAMIQUE

(30) Priority: 29.11.2010 KR 20100119413
(43) Date of publication of application: 09.10.2013
(73) Proprietor: Dacc Carbon, Jeonju-si, Jeollabuk-do (KR)
(72) Inventor: LEE, Junsang, Seoul 135-080 (KR); SHIN, Hyunkyu, Gyeongsangnam-Do 641- 936 (KR); CHOI, Yeonho, Jeollabuk-Do 561-192 (KR); CHO, Chaewook, Daejeon 305-251 (KR); KANG, Jungsuk, Jeollabuk-Do 561-757 (KR); IM, Dongwon, Gyeongsangnam-Do 621-800 (KR); CHEA, Byunggun, Jeollabuk-Do 561-232 (KR); CHOI, Moonsoo, Jeollabuk-Do 561-231 (KR)
(74) Representative: Vossius & Partner Patentanwälte Rechtsanwälte mbB
(86) International application number: PCT/KR2011/009131
(87) International publication number: WO 2012/074263

(56) References cited:
- JP-A- H0 559 350
- JP-A- 2002 255 665
- JP-A- 2002 510 596
- JP-A- 2006 151 804
- US-A- 5 439 080
- US-A- 6 030 913
- US-A1- 2008 090 064
- US-A1- 2009 297 707

## Description

### [Technical Field]

The present invention relates to a method of manufacturing a carbon-ceramic brake disc. A prior art method is for instance known from US-A-6 030 913.

### [Background Art]

A vehicle brake is classified into a drum brake and a disc brake.

The disc brake reduces a speed of a vehicle or stops the vehicle by slowing and stopping rotation of the disc due to frictional force caused by friction between a surface of the disc and a pad.

The disk having a high level of braking ability needs to be light in weight and to have high heat resistance, high impact resistance, high oxidation resistance and high wear resistance. In addition, the disk needs to have high strength and a high friction coefficient. To achieve this, the disc has been recently manufactured using carbon-fiber-reinforced ceramic composites.

The carbon-fiber-reinforced ceramic composites are carbon-fiber-reinforced materials using ceramic matrixes.

Hereinafter, the brake disc manufactured using carbon-fiber-reinforced ceramic composites is referred to as a carbon-ceramic brake disc.

In general, the carbon-ceramic brake disc is manufactured through a step of mixing phenolic resins with carbon fibers to produce a mixture, a step of pressing and heating the mixture to produce a molded body, a step of carbonizing the molded body, and a step of melting silicon to be infiltrated into the carbonized molded body.

PAN (Polyacrylonitrile)-based carbonized fibers are used as the carbon fibers. The PAN-based carbon fibers have high strength, high toughness and low brittleness. Accordingly, the PAN-based carbonized fibers are suitably used to strengthen the carbon-ceramic brake disc.

However, the PAN-based carbon fibers react easily with silicon. Accordingly, in the step of melting silicon to be infiltrated into the carbonized molded body, the PAN-based carbon fibers are easily eroded by the silicon, and the eroded portion becomes silicon carbide (SiC). When the PAN-based carbon fibers are eroded by the silicon, the PAN-based carbon fibers are easily broken by impact when a brake is operated. In such a case, the PAN-based carbon fibers do not serve to strengthen the carbon-ceramic brake disc.

Conventionally, in order to solve the problem that the PAN-based carbon fibers are easily eroded by the silicon, the PAN-based carbon fibers are coated to be used. Unfortunately, even when the PAN-based carbon fibers are coated to be used, it is difficult to completely prevent the PAN-based carbon fibers being eroded by the silicon.

Hereinafter, a step of manufacturing the carbon-ceramic brake disc will be described, and the reasons for the above-described difficulty will be also described.

The PAN-based carbon fibers are coated with liquid-phase phenolic resins.

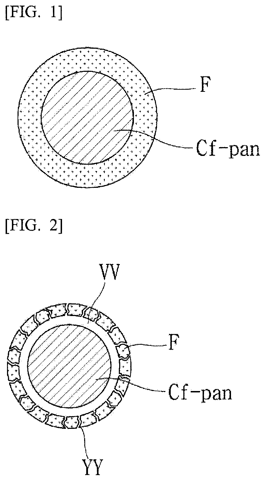

FIG. 1 is a longitudinal cross-sectional view illustrating PAN-based carbon fibers around which a coating film is formed. As illustrated in FIG. 1, a coating film F is formed around PAN-based carbon fibers (Cf-pan). The PAN-based carbon fibers (Cf-pan) having the coating film therearound and phenolic resins are mixed to produce a mixture. A molded body is produced by pressing and heating the mixture. The molded body is carbonized.

When the molded body is carbonized, the PAN-based carbon fibers and the coating film are shrunk.

A shrink rate of the PAN-based carbon fibers is proportional to a weight reduction ratio of the carbonized PAN-based carbon fiber, and a shrink rate of the coating film is proportional to the amount of residual carbons of the carbonized coating film. In general, the weight reduction ratio of the carbonized PAN-based carbon fibers is 5%, and the amount of residual carbons of the coating film is 50%. Thus, the PAN-based carbon fibers are shrunk within a range of 5% or less, while the coating film is shrunk within a range of 50% or more.

FIG. 2 is a diagram illustrating a gap formed between the PAN-based carbon fibers and the coating film and cracks generated in the coating film. As illustrated in FIG. 2, due to a large difference (45% or more) between the shrink rate of the PAN-based carbon fibers and the shrink rate of the coating film, after the molded body is carbonized, a gap VV is formed between the PAN-based carbon fibers and the coating film, and cracks YY occur in the coating film.

Silicon is melted to be infiltrated into the carbonized molded body.

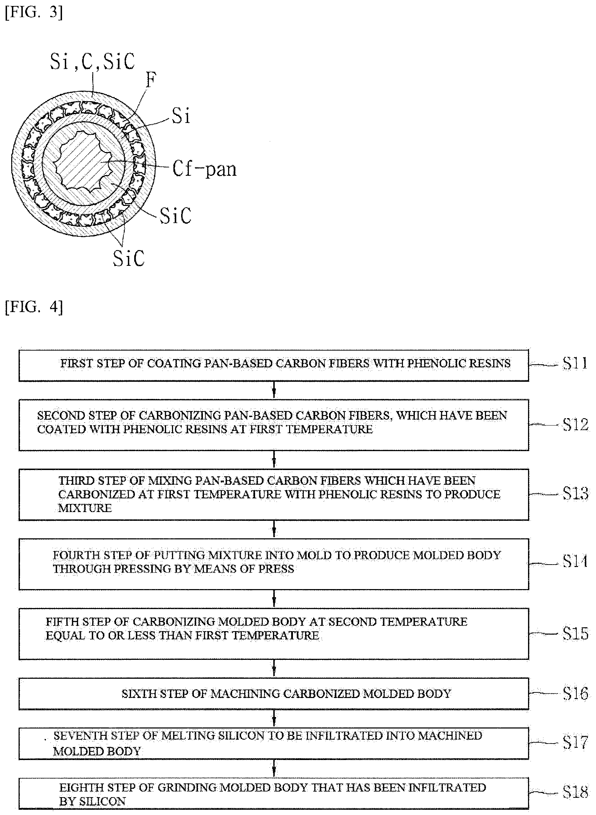

FIG. 3 is a diagram illustrating a state where the PAN-based carbon fibers are infiltrated by silicon through the cracks and the gap shown in FIG. 2 to be eroded. For reference, a silicon layer including components of silicon, carbon, and silicon carbide is formed around the coating film.

As illustrated in FIG. 3, when the silicon is melted to be infiltrated into the carbonized molded body, the PAN-based carbon fibers are infiltrated by the silicon through the cracks generated in the coating film and the gap formed between the PAN-based carbon fibers and the coating film to be eroded. For this reason, since the PAN-based carbon fibers are easily broken by impact when the brake is operated, the PAN-based carbon fibers do not serve to strengthen the carbon-ceramic brake disc.

### [Detailed Description of the Invention]

### [Technical Problem]

An object of the present invention is to provide a method of manufacturing a carbon-ceramic brake disc with which it is difficult for silicon to erode PAN-based carbon fibers through cracks and a gap by removing the gap formed between the PAN-based carbon fibers and a coating film and removing the cracks in the coating film.

### [Technical Solution]

In order to achieve the above object, a method of manufacturing a carbon-ceramic brake disc includes the features of claim 1.

### [Advantageous Effect]

According to the present invention, the gap formed between the PAN-based carbon fibers and the coating film is filled with the phenolic resins to be removed, and the cracks generated in the coating film are filled with the phenolic resins to be removed.

Accordingly, in the step of melting silicon to be infiltrated into the molded body, the silicon does not erode the PAN-based carbon fibers through the cracks and the gap. Thus, even after the silicon is melted to be infiltrated into the molded body, the PAN-based carbon fibers are maintained in their original shapes without being changed, so that the PAN-based carbon fibers are not easily broken when a brake is operated. Accordingly, it is possible to consistently maintain strength of the carbon-ceramic brake disc.

Further, since the gap does not exist between the PAN-based carbon fibers and the coating film, when the coating film is infiltrated by the silicon to become a part of matrixes, the PAN-based carbon fibers are not easily separated from the matrixes by firmly adhering thereto.

### [Description of Drawings]

FIG. 1 is a longitudinal cross-sectional view illustrating PAN-based carbon fibers around which a coating film is formed.
FIG. 2 is a diagram illustrating a gap formed between the PAN-based carbon fibers and the coating film and cracks generated in the coating film.
FIG. 3 is a diagram illustrating a state where the PAN-based carbon fibers are infiltrated by silicon through the cracks and the gap shown in FIG. 2 to be eroded.
FIG. 4 is a flowchart illustrating a method of manufacturing a carbon-ceramic brake disc according to a first embodiment of the present invention.
FIG. 5(a), 5(b), and 5(c) are diagrams illustrating a procedure of manufacturing a molded body by using a mixture.
FIG. 6 is a diagram illustrating a state where the cracks generated in the coating film and the gap formed between the PAN-based carbon fibers and the coating film are filled with the phenolic resins to be removed.
FIG. 7 is a diagram illustrating a state where cracks are not generated in the coating film carbonized at a first temperature when the molded body is carbonized at a second temperature equal to or less than the first temperature and a gap is not formed again between the PAN-based carbon fibers and the coating film carbonized at the first temperature.
FIG. 8 is a diagram illustrating a state where the coating film having the cracks is formed around the PAN-based carbon fibers in a double layer.
FIG. 9 is a diagram illustrating a state where the silicon does not erode the PAN-based carbon fibers shown in FIG. 7.
FIG. 10 is a diagram showing a carbon-ceramic brake disc manufactured by the method of manufacturing a carbon-ceramic brake disc according to the first embodiment of the present invention.
FIG. 11 is a flowchart illustrating a method of manufacturing a carbon-ceramic brake disc according to a second embodiment.
FIGS. 12(a), 12(b), and 12(c) are diagrams illustrating a procedure of manufacturing a first molded body using a first mixture.
FIGS. 13(a), 13(b), and 13(c) are diagrams illustrating a procedure of manufacturing a second molded body using a second mixture.
FIG. 14 is a diagram illustrating a carbon-ceramic brake disc manufactured by the method of manufacturing a carbon-ceramic brake disc according to the second embodiment of the present invention.
FIG. 15 is a flowchart illustrating a method of manufacturing a carbon-ceramic brake disc according to a third embodiment.

### [Embodiments for Carrying Out the Invention]

Hereinafter, a method of manufacturing a carbon-ceramic brake disc according to a first embodiment of the present invention will be described.

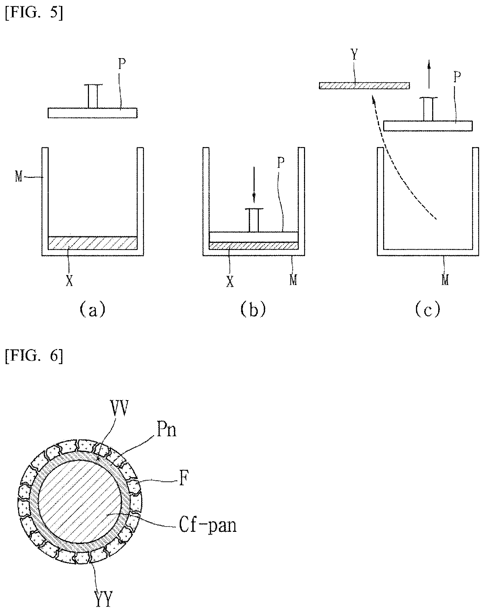

FIG. 4 is a flowchart illustrating a method of manufacturing a carbon-ceramic brake disc according to a first embodiment of the present invention. FIG. 5(a), 5(b), and 5(c) are diagrams illustrating a procedure of manufacturing a molded body by using a mixture. Solid-line arrow shown in FIGS. 5(a), 5(b), and 5(c) represents a direction where a press moves, and dotted-line arrow represents a direction where the molded body is taken out of a mold.

As shown in FIGS. 4, 5(a), 5(b) and 5(c), the method of manufacturing a carbon-ceramic brake disc according to the first embodiment of the present invention includes first step S11 of coating PAN-based carbon fibers with phenolic resins; second step S12 of carbonizing the PAN-based carbon fibers, which have been coated with the phenolic resins, at a first temperature; third step S13 of mixing the PAN-based carbon fibers, which have been carbonized at the first temperature, with the phenolic resins to produce a mixture X; fourth step S14 of putting the mixture X into a mold M to produce a molded body Y through pressing by means of a press P; fifth step S15 of carbonizing the molded body Y at a second temperature equal to or less than the first temperature; sixth step S16 of machining the carbonized molded body Y; seventh step S17 of melting silicon to be infiltrated into the machined molded body Y; and eighth step S18 of grinding the molded body Y that has been infiltrated by the silicon.

Hereinafter, first step S11 will be described.

The PAN-based carbon fibers are coated with the phenolic resins.

As illustrated in FIG. 1, a coating film F is formed around the PAN-based carbon fibers (Cf-pan).

Next, second step S12 will be described.

The PAN-based carbon fibers around which the coating film is formed are carbonized at the first temperature. The first temperature is equal to or higher than 2000°C.

As shown in FIG. 2, due to a large difference (45% or more) between a shrinkage rate of the PAN-based carbon fibers and a shrinkage rate of the coating film, a gap VV is generated between the PAN-based carbon fibers and the coating film, and cracks YY are generated in the coating film.

Next, third step S13 will be described.

The PAN-based carbon fibers of 30 to 70 vol%, around which the coating film is formed, and the phenolic resins of 70 to 30 vol% are mixed to each other to produce the mixture X.

Next, fourth step S14 will be described.

As shown in FIG. 5(a), the mixture X is put into the mold M.

As shown in FIG. 5(b), the mixture X is pressed by the press P to produce the molded body Y. At this time, the pressing pressure is in a range of 3 to 5 MPa. Here, the mixture X may be heated using a heater provided at the press P. The heating temperature is in a range of 120 to 180°C.

FIG. 6 is a diagram illustrating a state where the cracks generated in the coating film and the gap formed between the PAN-based carbon fibers and the coating film are filled with the phenolic resins to be removed.

As illustrated in FIG. 6, when the mixture X is pressed by the press P, the phenolic resins (Pn) are infiltrated into the cracks generated in the coating film and the gap formed between the PAN-based carbon fibers and the coating film, so that the cracks and the gap are filled. Thus, the cracks and the gap are removed.

As shown in FIG. 5(c), the molded body Y is taken out of the mold M.

The molded body Y is composed of the coated PAN-based carbon fibers that are randomly distributed within the cured phenolic resins. The cracks do not exist in the coating film, and the gap does not exist between the PAN-based carbon fibers and the coating film.

Next, fifth step S15 will be described.

The molded body Y is put into a crucible. The crucible is put into a vacuum resistance furnace. An atmosphere within the vacuum resistance furnace is a vacuum atmosphere or an inert atmosphere.

The vacuum resistance furnace increases a temperature of the molded body Y to the second temperature for 13 to 20 hours. The second temperature is in a range of 1550 to 2000°C. The vacuum resistance furnace maintains the temperature of the molded body Y at the second temperature for 1 to 2 hours. While the temperature of the molded body Y is increased to the second temperature and maintained at the second temperature, organic compounds included in the molded body Y are thermally decomposed to become carbons. Pores are formed in portions generated by the thermal-decomposition of the organic compounds.

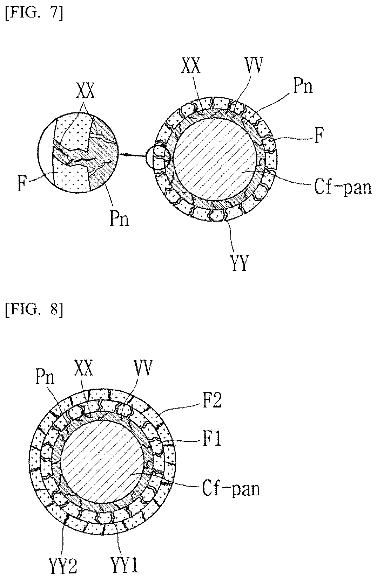

FIG. 7 is a diagram illustrating a state where cracks are not generated again in the coating film carbonized at the first temperature when the molded body is carbonized at the second temperature equal to or less than the first temperature and a gap is not formed again between the PAN-based carbon fibers and the coating film carbonized at the first temperature.

As illustrated in FIG. 7, when the molded body Y is carbonized at the second temperature (1550°C to 2000°C) equal to or less than the first temperature (2000°C), the coating film carbonized at the first temperature is not carbonized again. Thus, the cracks are not generated again in the coating film carbonized at the first temperature. Further, the gap is not formed again between the PAN-based carbon fibers and the coating film carbonized at the first temperature.

Here, fine cracks XX are generated in the phenolic resins (Pn) filling the cracks generated in the coating film carbonized at the first temperature. However, it is difficult for the silicon to erode the PAN-based carbon fibers through the fine cracks.

Meanwhile, in order to completely prevent the silicon from infiltrating through the fine cracks, by repeatedly performing first step S11 and second step S12 multiple times, the coating film having the cracks can be formed around the PAN-based carbon fibers in a multi-layer.

FIG. 8 is a diagram illustrating a state where the coating film having the cracks is formed around the PAN-based carbon fibers in a double layer.

For example, as illustrated in FIG. 8, when first step S11 and second step S12 are repeatedly performed two times, the coating film having the cracks is formed around the PAN-based carbon fibers in a double layer. The coating film includes a first coating film F1 that is primary formed around the PAN-based carbon fibers and a second coating film F2 that is secondary formed therearound. Directions of cracks YY1 generated in the first coating film F1 and directions of cracks YY2 generated in the second coating film F2 are deviated from each other. Accordingly, when the molded body is carbonized, even though the fine cracks are generated in the phenol resins filling the cracks of the first coating film and the cracks of the second coating film, since the directions of the cracks of the first coating film F1 and the directions of the cracks of the second coating film F2 are deviated from each other, it is difficult for the silicon to erode the PAN-based carbon fibers through the fine cracks. As the layer number of the coating film is increased, it is more difficult for the silicon to erode the PAN-based carbon fibers through the fine cracks.

Next, sixth step S16 will be described.

An axle hole through which an axle passes is formed in a central portion of the molded body Y.

Through holes through which bolts connected to a hat part pass are formed around the axle hole of the molded body Y at the same interval on a concentric circle. The hat part is connected to a wheel.

Next, seventh step S17 will be described.

The silicon is put into the crucible.

The molded body Y is put into the crucible so as to allow a lower part of the molded body to be buried in the silicon. An upper part of the molded body Y is covered with the silicon.

The crucible is put into the vacuum resistance furnace. An atmosphere of the vacuum resistance furnace is a vacuum atmosphere or an inert atmosphere.

The vacuum resistance furnace increases a temperature of the molded body Y to 1550°C for 13 hours.

The vacuum resistance furnace maintains the temperature of the molded body Y at 1550°C for 1 to 2 hours.

While the temperature of the molded body Y is increased to 1550°C and maintained at the increased temperature, the silicon is melted to be infiltrated into the pores of the molded body Y.

Most of the silicon infiltrated into the pores reacts with the carbons included in the molded body Y to become silicon carbide (SiC). The pores are filled with the rest of the silicon that does not react with the carbons.

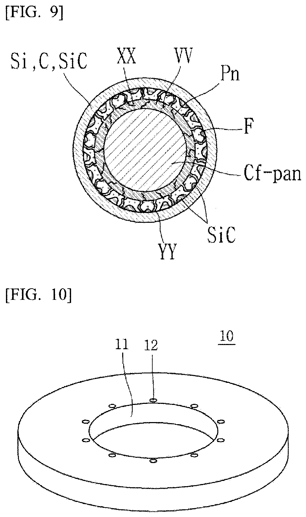

FIG 9 is a diagram illustrating a state where the silicon does not erode the PAN-based carbon fibers shown in FIG. 7. For reference, a silicon layer including components of silicon, carbon, and silicon carbide is formed around the coating film.

As illustrated in FIG. 9, the gap does not exist between the PAN-based carbon fibers and the coating film F, and the cracks do not exist in the coating film. Accordingly, the silicon does not erode the PAN-based carbon fibers through the cracks and the gap. Thus, even after the silicon is melted to be infiltrated into the molded body, the PAN-based carbon fibers are maintained in their original shapes without being changed, so that the PAN-based carbon fibers are not easily broken when a brake is operated. Accordingly, it is possible to consistently maintain strength of the carbon-ceramic brake disc.

Meanwhile, since the gap does not exist between the PAN-based carbon fibers and the coating film F, when the coating film is infiltrated by the silicon to become a part of matrixes, the PAN-based carbon fibers are not easily separated from the matrixes by firmly adhering thereto. Here, the matrixes mean ceramic parts other than the PAN-based carbon fibers in the molded body Y that has been infiltrated by the silicon.

Next, seventh step S 17 will be described.

The molded body Y is ground by a grinder.

FIG. 10 is a diagram showing a carbon-ceramic brake disc manufactured by the method of manufacturing a carbon-ceramic brake disc according to the first embodiment of the present invention.

As shown in FIG. 10, a carbon-ceramic brake disc 10 manufactured by the method of manufacturing a carbon-ceramic brake disc according to the first embodiment of the present invention is formed as a single body. The single body is composed of PAN-based carbon fibers and ceramic matrixes other than the PAN-based carbon fibers, and a gap does not exist between the PAN-based carbon fibers and the matrixes.

An axle hole 11 through which an axle passes is formed in a central portion of the carbon-ceramic brake disc 10. Through holes 12 through which bolts connected to a hat part pass are formed around the axle hole 11 at the same interval on a concentric circle.

A thickness of the carbon-ceramic brake disc 10 is in a range of 20 to 50 mm.

A composition of the carbon-ceramic brake disc 10 includes SiC of 65 to 25 wt%, Si of 15 to 20 wt%, and C of 20 to 50 wt%. The PAN-based carbon fibers (Cf-pan) are randomly distributed in the carbon-ceramic brake disc 10. The PAN-based carbon fiber is formed such that the number of filaments each having a diameter of 7 µm in per bundle is in a range of 1K to 48K. A length of the PAN-based carbon fiber is in a range of 1 to 30 mm.

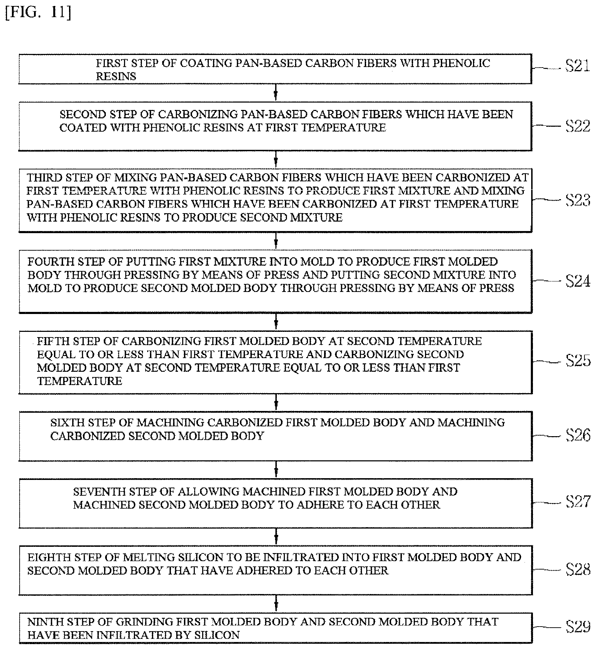

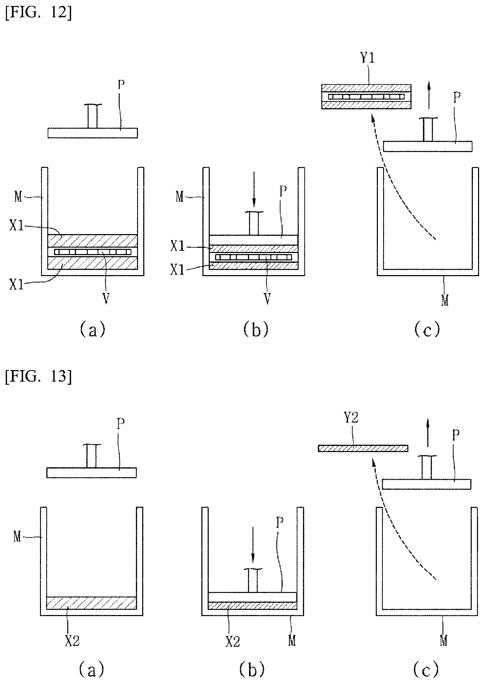

FIG. 11 is a flowchart illustrating a method of manufacturing a carbon-ceramic brake disc according to a second embodiment. FIGS. 12(a), 12(b), and 12(c) are diagrams illustrating a procedure of manufacturing a first molded body using a first mixture. FIGS. 13(a), 13(b), and 13(c) are diagrams illustrating a procedure of manufacturing a second molded body using a second mixture.

As illustrated in FIGS. 11, 12(a), 12(b), 12(c), 13(a), 13(b), and 13(c), the method of manufacturing a carbon-ceramic brake disc according to the second embodiment includes first step S21 of coating PAN-based carbon fibers with phenolic resins; second step S22 of carbonizing the PAN-based carbon fibers, which have been coated with the phenolic resins, at a first temperature; third step S23 of mixing the PAN-based carbon fibers, which have been carbonized at the first temperature, with the phenolic resins to produce a first mixture X1 and mixing the PAN-based carbon fibers, which have been carbonized at the first temperature, with the phenolic resins to produce a second mixture X2; fourth step S24 of putting the first mixture X1 into a mold M to produce a first molded body Y1 through pressing by means of a press P and putting the second mixture X2 into the mold M to produce a second molded body Y2 through pressing by means of the press P; fifth step S25 of carbonizing the first molded body Y1 at a second temperature equal to or less than the first temperature and carbonizing the second molded body Y2 at the second temperature equal to or less than the first temperature; sixth step S26 of machining the carbonized first molded body Y1 and machining the carbonized second molded body Y2; seventh step S27 of allowing the machined first molded body Y1 and the machined second molded body Y2 to adhere to each other; eighth step S28 of melting silicon to be infiltrated into the first molded body Y1 and the second molded body Y2 that have adhered to each other; and ninth step S29 of grinding the first molded body Y1 and the second molded body Y2 that have been infiltrated by the silicon.

Hereinafter, first step S21 will be described.

The PAN-based carbon fibers are coated with the phenolic resins. By doing this, a coating film is formed around the PAN-based carbon fibers.

Next, second step S22 will be described.

The PAN-based carbon fibers around which the coating film is formed are carbonized at the first temperature. The first temperature is equal to or higher than 2000°C. As shown in FIG. 2, due to a large difference (45% or more) between a shrinkage rate of the PAN-based carbon fibers and a shrinkage rate of the coating film, a gap VV is generated between the PAN-based carbon fibers and coating film, and cracks YY are generated in the coating film.

Next, third step S23 will be described.

The carbonized PAN-based carbon fibers of 30 to 70 vol% and the phenolic resins of 70 to 30 vol% are mixed to each other to produce the first mixture X1. A supporting layer to be described below is formed using the first mixture X1.

The carbonized PAN-based carbon fibers of 30 to 70 vol% and the phenolic resins of 70 to 30 vol% are mixed to each other to produce the second mixture X2. A friction layer to be described below is formed using the second mixture X2.

Next, fourth step S24 will be described.

As illustrated FIG. 12(a), the first mixture X1 is put into the mold M.

A core body V is placed on the first mixture X1. The core body V has a shape of a cooling channel. The first mixture X1 is put on the core body V.

As illustrated in FIG. 12(b), the first mixture is pressed by the press P to produce the first molded body Y1. At this time, the pressing pressure is in a range of 3 to 5 MPa. Here, the first mixture X1 may be heated by a heater provided at the press P. The heating temperature is in a range of 120 to 180°C. As illustrated in FIG. 6, when the first mixture X1 is pressed by the press P, the phenolic resins (Pn) are infiltrated into the cracks generated in the coating film and the gap formed between the PAN-based carbon fibers and the coating film, so that the cracks and the gap are filled. Thus, the cracks and the gap are removed.

As illustrated in FIG. 12(c), the first molded body Y1 is taken out of the mold M.

The first molded body Y1 is composed of coated PAN-based carbon fibers that are randomly distributed within the cured phenolic resins. The cracks do not exist in the coating film, and the gap does not exist between the PAN-based carbon fibers and the coating film.

As illustrated in FIG. 13(a), the second mixture X2 is put into the mold M.

As illustrated in FIG. 13(b), the second mixture X2 is pressed by the press P to produce the second molded body Y2. At this time, the pressing pressure is in a range of 3 to 5 MPa. Here, the second mixture X2 may be heated by a heater provided at the press P. The heating temperature is in a range of 120 to 180°C. As illustrated in FIG. 6, when the second mixture X2 is pressed by the press P, the phenolic resins (Pn) are infiltrated into the cracks generated in the coating film and the gap formed between the PAN-based carbon fibers and the coating film, so that the cracks and the gap are filled. Thus, the cracks and the gap are removed.

As illustrated in FIG. 13(c), the second molded body Y2 is taken out of the mold M.

The second molded body Y2 is composed of the coated PAN-based carbon fibers that are randomly distributed within the cured phenolic resins. The cracks do not exist in the coating film, and the gap does not exist between the PAN-based carbon fibers and the coating film.

Next, fifth step S25 will be described.

The first molded body Y1 is carbonized at the second temperature. The second molded body Y2 is carbonized at the second temperature. A method of carbonizing the first molded body Y1 and the second molded body Y2 is the same as the method of carbonizing the molded body in the first embodiment, and descriptions thereof will not be repeated.

When the first molded body Y1 is carbonized, the core body V is thermally decomposed. In the thermally decomposing of the core body V, the amount of residual carbons is preferably less than 10 wt%. To achieve this, the core body V is made of thermoplastic resin such as polycarbonate, ABS (Acrylonitrile Butadiene Styrene copolymer) resin, styrene resin, polyethylene, or acrylic resin. When the core body V is thermally decomposed, cooling channels are formed in empty portions remaining after the core body V is thermally decomposed.

As illustrated in FIG. 7, when the first molded body Y1 and the second molded body Y2 are carbonized at the second temperature (1550 to 2000°C) equal to or less than the first temperature (2000°C), the coating film carbonized at the first temperature is not carbonized again.

Thus, cracks are not generated again in the coating film of the first molded body Y1 carbonized at the first temperature, and cracks are not generated again in the coating film of the second molded body Y2 carbonized at the first temperature.

Further, a gap is not formed again between the PAN-based carbon fibers and the coating film of the first molded body Y1 carbonized at the first temperature, and a gap is not formed again between the PAN-based carbon fibers and the coating film of the second molded body Y2 carbonized at the first temperature.

Here, fine cracks are generated in the phenolic resins (Pn) filling the cracks generated in the coating film of the first molded body Y1 carbonized at the first temperature and the coating film of the second molded body Y2 carbonized at the first temperature. However, it is difficult for the silicon to erode the PAN-based carbon fibers through the fine cracks.

Next, sixth step S26 will be described.

Axle holes through which an axle passes are respectively formed in central portions of the first molded body Y1 and the second molded body Y2.

Through holes through which bolts connected to a hat part pass are respectively formed around the axle holes of the first molded body Y1 and the second molded body Y2 at the same interval on a concentric circle. The hat part is connected to a wheel.

Next, seventh step S27 will be described.

Upper and lower surfaces of the first molded body Y1 are coated with liquid-phase phenolic resin. The coating thickness is in a range of 0.1 to 2 mm. The second molded body Y2 adheres to the upper and lower surfaces of the first molded body Y1. The liquid-phase phenolic resin protruding between the first molded body Y1 and the second molded body Y2 is removed.

As another method, solid-phase phenolic resin is sprayed onto the upper and lower surfaces of the first molded body Y1. The second molded body Y2 is placed on the upper and lower surfaces of the first molded body Y1, and is then pressed by the press to be heated by the heater provided at the press. While the solid-phase phenolic resin is melted, the second molded body Y2 adheres to the upper and lower surfaces of the first molded body Y1. The liquid-phase phenolic resin (a phase where the solid-phase phenolic resin is melted) protruding between the first molded body Y1 and the second molded body Y2 is removed.

When the first molded body Y1 and the second molded body Y2 adhere to each other, an adhesive layer to be described below is formed between the first molded body Y1 and the second molded body Y2.

Next, eighth step S28 will be described.

Silicon is melted to be infiltrated into the first molded body Y1 and the second molded body Y2 that have adhered to each other. A method of melting silicon to be infiltrated into the first molded body Y1 and the second molded body Y2 that have adhered to each other is the same as the method of melting silicon to be infiltrated into the molded body in the first embodiment, and thus description thereof will not be repeated.

Since the gap does not exist between the coating film and the PAN-based carbon fibers included in the first molded body Y1 and the second molded body Y2 and the cracks do not exist in the coating film, it is difficult for the silicon to erode the PAN-based carbon fibers through the cracks and the gap.

Meanwhile, since the gap does not exist between the PAN-based carbon fibers and the coating film F, when the coating film is infiltrated by the silicon to become a part of matrixes, the PAN-based carbon fibers are not easily separated from the matrixes by firmly adhering thereto. Here, the matrixes mean ceramic parts other than the PAN-based carbon fibers in the first molded body Y1 and the second molded body Y2 that have been infiltrated by the silicon.

Next, ninth step S29 will be described.

The first molded body Y1 and the second molded body Y2 are ground by a grinder.

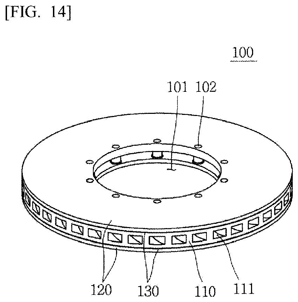

FIG. 14 is a diagram illustrating a carbon-ceramic brake disc manufactured by the method of manufacturing a carbon-ceramic brake disc according to the second embodiment of the present invention.

As illustrated in FIG. 14, the carbon-ceramic brake disc 110 manufactured by the method of manufacturing a carbon-ceramic brake disc according to the second embodiment of the present invention includes a supporting layer 110, a friction layer 120, and an adhesive layer 130. The supporting layer 110 and the friction layer 120 are composed of PAN-based carbon fibers and ceramic matrixes other than the PAN-based carbon fibers, and a gap does not exist between the matrixes and the PAN-based carbon fibers.

An axle hole 101 through which an axle passes is formed in a central portion of a carbon-ceramic brake disc 100. Through holes 102 through which bolts connected to a hat part pass are formed around the axle hole 101 at the same interval on a concentric circle.

The supporting layer 110 includes cooling channels 111. A thickness of the supporting layer 110 is in a range of 20 to 50 mm. A composition of the supporting layer 110 includes SiC of 65 to 25 wt%, Si of 15 to 25 wt%, and C of 20 to 50 wt%.

Since the composition of the supporting layer 110 and the composition of the friction layer 120 are the same, a thermal expansion coefficient of the supporting layer 110 and a thermal expansion coefficient of the friction layer 120 are the same. Accordingly, when the carbon-ceramic brake disc 100 is manufactured, due to a difference between the thermal expansion coefficients of the supporting layer 110 and the friction layer 120, cracks do not occur in the friction layer 120.

The PAN-based carbon fibers are randomly distributed in the supporting layer 110. The PAN-based carbon fiber is formed such that the number of filaments each having a diameter of 7 µm in per bundle is in a range of 1K to 48K. A length of the carbon fiber is in a range of 25 to 30 mm.

The PAN-based carbon fibers are randomly distributed in the friction layer 120. The PAN-based carbon fiber is formed such that the number of filaments each having a diameter of 7 µm in per bundle is in a range of 1K to 48K. A length of the PAN-based carbon fiber is in a range of 1 to 3 mm.

Meanwhile, since the friction layer 120 is exposed to the outside, the PAN-based carbon fibers included in the friction layer 120 come in contact with air to be easily oxidized. Accordingly, in order to minimize the contact area with the air, lengths of the PAN-based carbon fibers included in the friction layer 120 are shorter than lengths of the PAN-based carbon fibers included in the supporting layer 110. Even though the lengths of the PAN-based carbon fibers are short, when a brake is operated, since the friction layer 120 less receives relatively the impact in relation to the supporting layer 110, strength of the friction layer 120 can be sufficiently maintained.

A thickness of the adhesive layer 130 is in a range of 0.1 to 1 mm. A composition of the adhesive layer 130 includes SiC of 50 wt%, Si of 45 wt%, and C of 5 wt%.

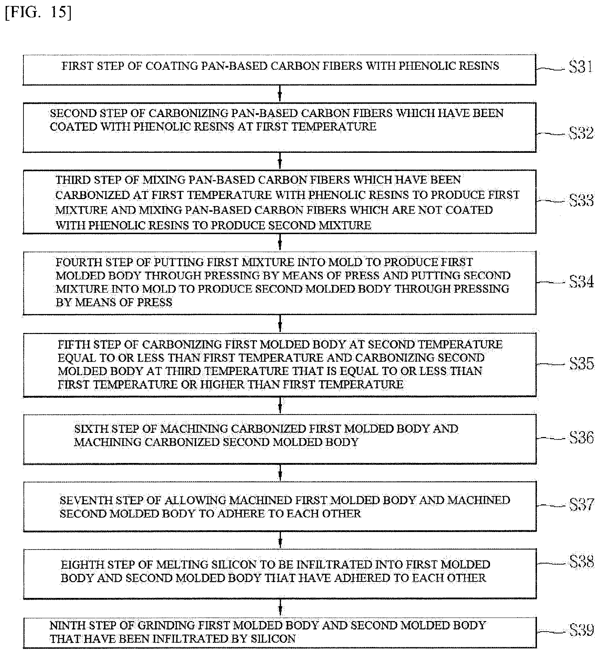

FIG. 15 is a flowchart illustrating a method of manufacturing a carbon-ceramic brake disc according to a third embodiment.

As illustrated in FIGS. 11(a), 11(b), 11(c), 12(a), 12(b), 12(c) and 15, the method of manufacturing a carbon-ceramic brake disc according to the third embodiment includes first step S31 of coating PAN-based carbon fibers with phenolic resins; second step S32 of carbonizing the PAN-based carbon fibers, which have been coated with the phenolic resins, at a first temperature; third step S33 of mixing the PAN-based carbon fibers, which have been carbonized at the first temperature, with the phenolic resins to produce a first mixture X1 and mixing PAN-based carbon fibers, which are not coated, with the phenolic resins to produce a second mixture X2; fourth step S34 of putting the first mixture X1 into a mold M to produce a first molded body Y1 through pressing by means of a press P and putting the second mixture X2 into the mold M to produce a second molded body Y2 through pressing by means of the press P; fifth step S35 of carbonizing the first molded body Y1 at a second temperature equal to or less than the first temperature and carbonizing the second molded body Y2 at a third temperature that is equal to or less than the first temperature or higher than the first temperature; sixth step S36 of machining the carbonized first molded body Y1 and machining the carbonized second molded body Y2; seventh step S37 of allowing the machined first molded body Y1 and the machined second molded body Y2 to adhere to each other; eighth step S38 of melting silicon to be infiltrated into the first molded body Y1 and the second molded body Y2 that have adhered to each other; and ninth step S39 of grinding the first molded body Y1 and the second molded body Y2 that have been infiltrated by the silicon.

In the method of manufacturing a carbon-ceramic brake disc according to the third embodiment of the present invention, the second mixture X2 is produced by mixing the PAN-based carbon fibers that are not coated and the phenolic resins. Accordingly, since the PAN-based carbon fibers included in the friction layer are not coated, the PAN-based carbon fibers are eroded by the silicon.

Further, the second molded body Y2 is carbonized at the third temperature that is equal to or less than the first temperature or is higher than the first temperature. That is, differently from the second temperature, the third temperature may not need to be equal to or less than the first temperature.

Excepting for the aforementioned description, the method of manufacturing a carbon-ceramic brake disc is the same as the method of manufacturing a carbon-ceramic brake disc according to the second embodiment.

Further, a carbon-ceramic brake disc manufactured by the method of manufacturing a carbon-ceramic brake disc according to the third embodiment is the same as the carbon-ceramic brake disc manufactured by the method of manufacturing a carbon-ceramic brake disc according to the second embodiment except that the PAN-based carbon fibers that have been eroded by the silicon are included in the friction layer.

In the third embodiment, reasons why the PAN-based carbon fibers included in the friction layer are not coated are as follows.

When the brake is operated, the supporting layer receives much stress in relation to the friction layer. Accordingly, since strength of the friction layer is allowed to be relatively smaller than strength of the supporting layer, even though the PAN-based carbon fibers included in the friction layer are eroded by the silicon, there is no remarkable problem. For this reason, the coating film does not need to be formed on the PAN-based carbon fibers included in the friction layer. Further, when the coating film is formed on the PAN-based carbon fibers included in the friction layer, the number of carbons is increased in the friction layer, so that the friction layer can be oxidized. Accordingly, there is less need for the coating film to be formed on the PAN-based carbon fibers included in the friction layer.

## Claims

1. A method of manufacturing a carbon-ceramic brake disc, comprising:
a first step of coating PAN-based carbon fibers (Cf-pan) with phenolic resins;
a second step of carbonizing the PAN-based carbon fibers, which have been coated with the phenolic resins, at a first temperature;
a third step of mixing the PAN-based carbon fibers, which have been carbonized at the first temperature, with the phenolic resins to produce a mixture (X);
a fourth step of putting the mixture into a mold (M) to produce a molded body (Y) through pressing by means of a press (P);
a fifth step of carbonizing the molded body at a second temperature equal to or less than the first temperature;
a sixth step of machining the carbonized molded body;
a seventh step of melting silicon to be infiltrated into the machined molded body; and
an eighth step of grinding the molded body that has been infiltrated by the silicon,
**characterized in that**, in the second step, the first temperature is set equal to or higher than 2000°C, so as to form a carbonized coating film around the PAN-based carbon fiber film, and
wherein, in the fifth step, the second temperature is set in a range of 1550 to 2000°C, so that the coating film is not carbonized again.

2. The method of manufacturing a carbon-ceramic brake disc according to claim 1,
wherein the PAN-based carbon fibers and the coating film have different shrinkage rates, such that in the second step, a gap (VV) is formed between the PAN-based carbon fibers and the coating film, and cracks (YY) are generated in the coating film, and
in the fourth step, pressure applied by the press is set to have the gap and the cracks filled with the phenolic resins.

3. The method of manufacturing a carbon-ceramic brake disc according to claim 1, wherein the first step and the second step are repeatedly performed multiple times, and a coating film having cracks is formed around the PAN-based carbon fibers in a multi-layer.

## Patentansprüche

1. Verfahren zur Herstellung einer Carbon-Keramik-Bremsscheibe, welches folgende Schritte aufweist:
einen ersten Schritt zum Beschichten von Kohlenstofffasern auf PAN-Basis (Cf-pan) mit Phenolharzen,
einen zweiten Schritt zum Karbonisieren der mit den Phenolharzen beschichteten Kohlenstofffasern auf PAN-Basis bei einer ersten Temperatur,
einen dritten Schritt zum Mischen der bei der ersten Temperatur karbonisierten Kohlenstofffasern auf PAN-Basis mit den Phenolharzen, um eine Mischung (X) zu erzeugen,
einen vierten Schritt zum Einbringen der Mischung in eine Form (M), um einen Formkörper (Y) durch Pressen mit Hilfe einer Presse (P) zu erzeugen,
einen fünften Schritt zum Karbonisieren des Formkörpers bei einer zweiten Temperatur, die höchstens so hoch wie die erste Temperatur ist,
einen sechsten Schritt zum Bearbeiten des karbonisierten Formkörpers,
einen siebten Schritt zum Schmelzen von Silizium zum Infiltrieren des bearbeiteten Formkörpers und
einen achten Schritt zum Schleifen des siliziuminfiltrierten Formkörpers,
**dadurch gekennzeichnet, dass** die erste Temperatur im zweiten Schritt auf ≥ 2000° C eingestellt wird, um einen karbonisierten Beschichtungsfilm um die Kohlenstofffaserschicht auf PAN-Basis zu bilden, und
wobei im fünften Schritt die zweite Temperatur im Bereich von 1550 bis 2000° C eingestellt wird, so dass der Beschichtungsfilm nicht nochmals karbonisiert wird.

2. Verfahren zur Herstellung einer Carbon-Keramik-Bremsscheibe nach Anspruch 1, wobei die Kohlenstofffasern auf PAN-Basis und der Beschichtungsfilm unterschiedliche Schwindungsraten aufweisen, so dass im zweiten Schritt zwischen den Kohlenstofffasern auf PAN-Basis und dem Beschichtungsfilm ein Zwischenraum (VV) gebildet wird und in dem Beschichtungsfilm Risse (YY) entstehen, und
im vierten Schritt der durch die Presse ausgeübte Druck so eingestellt wird, dass der Zwischenraum und die Risse mit den Phenolharzen gefüllt werden.

3. Verfahren zur Herstellung einer Carbon-Keramik-Bremsscheibe nach Anspruch 1, wobei der erste und der zweite Schritt mehrfach wiederholt werden und um die Kohlenstofffasern auf PAN-Basis ein Beschichtungsfilm mit Rissen in einer Mehrfachschicht ausgebildet wird.

## Revendications

1. Procédé de fabrication d'un disque de frein en carbone-céramique, comprenant :
une première étape de revêtement de fibres de carbone à base de PAN (Cf-pan) avec des résines phénoliques ;
une seconde étape de carbonisation des fibres de carbone à base de PAN, qui ont été revêtues avec les résines phénoliques, à une première température ;
une troisième étape de mélange des fibres de carbone à base de PAN, qui ont été carbonisées à la première température, avec les résines phénoliques pour produire un mélange (X) ;
une quatrième étape de dépôt du mélange dans un moule (M) pour produire un corps moulé (Y) par pressage au moyen d'une presse (P) ;
une cinquième étape de carbonisation du corps moulé à une seconde température inférieure ou égale à la première température ;
une sixième étape d'usinage du corps moulé carbonisé ;
une septième étape de fusion de silicium à infiltrer dans le corps moulé usiné ; et
une huitième étape de broyage du corps moulé qui a été infiltré par le silicium,
**caractérisé en ce que**, dans la seconde étape, la première température est réglée supérieure ou égale à 2 000°C, afin de former un film de revêtement carbonisé autour du film de fibre de carbone à base de PAN, et
dans lequel, dans la cinquième étape, la seconde température est réglée dans un intervalle de 1 550 à 2 000°C de sorte que le film de revêtement n'est pas carbonisé à nouveau.

2. Procédé de fabrication d'un disque de frein de carbone-céramique selon la revendication 1,
dans lequel les fibres de carbone à base de PAN et le film de revêtement présentent des taux de retrait différents, de sorte que dans la seconde étape, un espace (VV) est formé entre les fibres de carbone à base de PAN et le film de revêtement, et des fissures (YY) sont produites dans le film de revêtement, et
dans la quatrième étape, une pression appliquée par la presse est réglée pour présenter l'espacement et les fissures remplis avec les résines phénoliques.

3. Procédé de fabrication d'un disque de frein de carbone-céramique selon la revendication 1, dans lequel la première étape et la seconde étape sont réalisées de manière répétée plusieurs fois, et un film de revêtement présentant des fissures est formé autour des fibres de carbone à base de PAN dans une couche multiple.
